# EUROPÄISCHE PATENTANMELDUNG

(11) **EP 2 269 433 A1**
(43) Veröffentlichungstag der Anmeldung: **05.01.2011**
(21) Anmeldenummer: 10163510.0
(22) Anmeldetag: 21.05.2010
(51) Int. Cl.: A01B 79/00, A01D 34/00

(54) **Autonome mobile Plattform zur Flächenbearbeitung und Verfahren zur Flächenbearbeitung**

(30) Priorität: 01.07.2009 DE 102009027396
(71) Anmelder: Robert Bosch GmbH, 70442 Stuttgart (DE)
(72) Erfinder: Biber, Peter, 72070, Tuebingen (DE); Tiefenau, Teja, 38122, Braunschweig (DE); Svensson, Anke, 38100, Braunschweig (DE)

(57) **Zusammenfassung**

Die Erfindung betrifft eine autonome mobile Plattform zur Flächenbearbeitung mit einem selbststeuernden Fahrzeug, das zum autonomen Fortbewegen auf einer Fläche (20) und als Träger für eine Arbeits- und/oder Funktionseinheit (14) zur Bearbeitung der Fläche in einem ersten Bearbeitungsmodus ausgebildet ist, wobei das Fahrzeug Navigationsmittel (18, 19) zur Bestimmung einer Position des Fahrzeugs in der Fläche aufweist. Erfindungsgemäß ist vorgesehen, dass die Navigationsmittel eine Bestimmungseinheit (10) für eine ausgewählte oder auswählbare Teilfläche (22) in der Fläche (20) aufweisen und das Fahrzeug so eingerichtet ist, dass es die Bearbeitung der Teilfläche in einem zweiten, vom ersten Bearbeitungsmodus verschiedenen Bearbeitungsmodus durchführt.

## Beschreibung

### Stand der Technik

Die vorliegende Erfindung betrifft eine autonome mobile Plattform zur Flächenbearbeitung nach dem Oberbegriff des Hauptanspruchs sowie ein Verfahren zur Flächenbearbeitung nach dem unabhängigen Patentanspruch 8.

Eine derartige Vorrichtung, insbesondere ausgestaltet als sogenannter autonomer Rasenmäher (ARM), ist aus dem Stand der Technik, insbesondere für den Privatbereich, bekannt. Aufgabe und Zweck einer solchen Vorrichtung ist es, autonom, d.h. selbststeuernd und ohne kontinuierlichen Eingriff einer Bedienperson, eine Fläche (z.B. einen Rasen) zu bearbeiten, wobei ein Qualitätskriterium für erfolgreichen Einsatz das effiziente, vollständige Bearbeiten der Fläche, einerseits ohne redundante Überschneidungen, andererseits ohne ausgelassene Flächenbereiche, ist.

Aus dem Stand der Technik sind zu diesem Zweck mehrere Vorgehensweisen bekannt, um die Navigation der Plattform mit dem zugehörigen Fahrzeug zu gewährleisten, wobei aktuell häufig die sogenannte Zufallsnavigation benutzt wird. Dabei fährt das Fahrzeug (etwa der ARM) innerhalb angezeigter Grenzen zufallsgesteuert, wendet etwa bei einer (typischerweise durch einen Einfassungsdraht definierten) Grenze mit zufällig gewähltem neuen Fahrtwinkel. Entsprechend dauert es üblicherweise beträchtliche Zeit, bis eine Rasenfläche vollständig abgefahren ist, wobei es häufig zu (ineffizientem, da redundantem) Abfahren derselben Bereiche kommt.

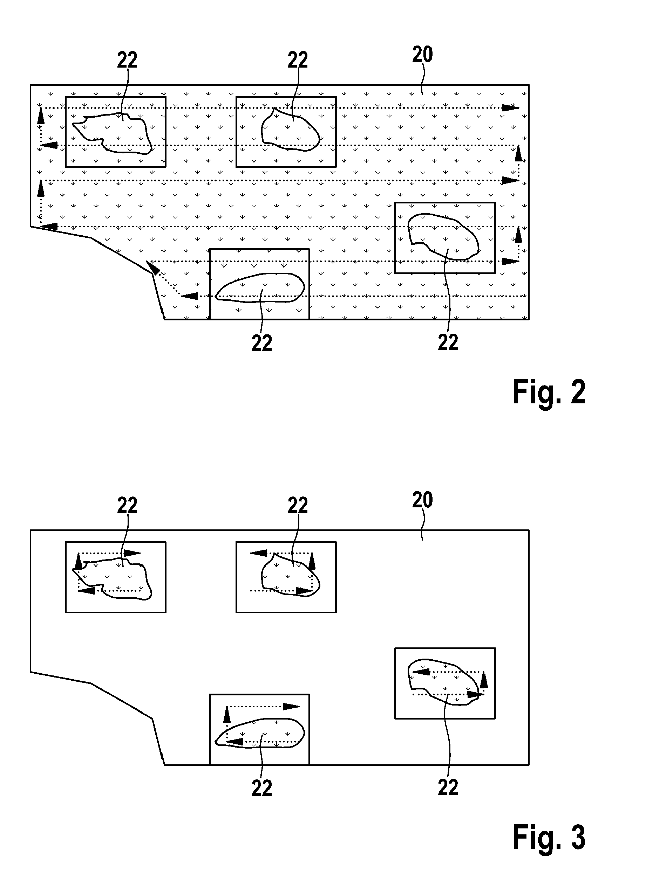

Bekannt ist es daher, in der in Fig. 2 gezeigten Art und Weise sogenannte virtuelle Bahnen für das flächendeckende Betreiben mobiler Systeme zu definieren, etwa in Form von in der Fig. 2 auf dem Rasenstück 20 gezeigten Mäandern.

Relativ problematisch ist es jedoch, wenn derartige Flächenstücke, etwa der Rasen 20 in Fig. 2, Teilbereiche, im Weiteren auch Teilflächen genannt, aufweisen, welche schematisch mit dem Bezugszeichen 22 versehen und schematisch umrahmt gezeigt sind: Derartige Flächen, etwa Bereiche mit besonders dichtem oder zähem Grasbewuchs innerhalb eines Rasens, eignen sich typischerweise nicht für das vollständige Mähen in lediglich einem Arbeitsgang, vielmehr ist für diese Flächen mindestens ein zusätzliches Überfahren notwendig.

Entsprechend ist es aufwändig, in der in Fig. 2 gezeigten Mäanderform eine vollständig befriedigende Schneidequalität des gesamten Rasens zu erreichen, da ggf. der gesamte Mäanderpfad mehrfach abzufahren ist.

Noch problematischer wird die Situation bei den geschilderten Teilbereichen (Teilflächen), wenn diese mit dem Zufallsprinzip erreicht werden müssen; hier potenziert sich dann ggf. der notwendige Zeitaufwand.

### Offenbarung der Erfindung

### Technische Aufgabe

Aufgabe der vorliegenden Erfindung ist es daher, eine verbesserte autonome mobile Plattform nach dem Oberbegriff des Hauptanspruchs zu finden, welche effizient und mit geringem apparativen Aufwand auch das Bearbeiten komplexer Flächen, insbesondere von Flächen mit besonders bearbeitungsbedürftigen Teilbereichen, ermöglicht. Ferner ist ein entsprechendes Verfahren zur autonomen Flächenbearbeitung mittels eines selbststeuernden Fahrzeugs (insbesondere ARM) zu schaffen.

Die Aufgabe wird durch die Vorrichtung mit den Merkmalen des Hauptanspruchs sowie das Verfahren mit den Merkmalen des unabhängigen Patentanspruchs 8 gelöst; vorteilhafte Weiterbildungen der Erfindung sind in den Unteransprüchen beschrieben.

In erfindungsgemäß vorteilhafter Weise weist die autonome mobile Plattform (etwa bevorzugt realisiert als autonomer Rasenmäher) mit ihren Navigationsmitteln eine Bestimmungseinheit für eine ausgewählte oder auswählbare Teilfläche in der Fläche, z.B. dem Gesamtrasen, auf. Erfindungsgemäß ist die Arbeits- bzw. Funktionseinheit (also etwa die auf dem Fahrzeug getragene Mäheinrichtung) so ausgestaltet, dass sie die Bearbeitung dieser Teilfläche in einem besonderen zweiten Bearbeitungsmodus, also etwa durch gezieltes Anfahren und/oder einen besonders intensiven Mähbetrieb, durchführt, insbesondere wenn durch Wirkung der Bestimmungseinheit das Fahrzeug an oder in der Teilfläche steht.

Als "zweiter Bearbeitungsmodus" im Sinne der Erfindung ist dabei einerseits von in der Erfindung umfasst, die Bearbeitung besonders intensiv, z.B. mit zusätzlicher Mähkraft oder dergleichen, durchzuführen. Andererseits ist jedoch von diesem Modus auch umfasst, dass etwa die Teilfläche gesondert angefahren und (in ansonsten normaler Weise alternativ auch intensiv) bearbeitet, etwa gemäht, wird, während der Bereich der Fläche außerhalb der Teilfläche (also etwa der umgebende Rasenbereich) lediglich überfahren wird, ohne dass hier ein Mähbetrieb erfolgt.

Entsprechend ermöglicht es die Erfindung, einerseits einen Normalbetrieb durchzuführen, also etwa eine Gesamtfläche vollständig (und etwa in einem vorbestimmten, zufälligen und/oder durch eine gesonderte Navigation geführten Muster) abzufahren. Während dieses regulären Betriebs, alternativ durch gesonderte Maßnahmen, etwa durch Programmierung wird die (mindestens eine) Teilfläche erfasst.

In einem darauffolgenden zweiten Bearbeitungsmodus ist es dann möglich, selektiv und effizient genau jene (mindestens eine) Teilfläche (N) anzufahren und erneut zu mähen, wobei die Fläche außerhalb der besonders behandlungsbedürftigen Teilfläche unbearbeitet bleiben kann, mit den entsprechenden Effizienzvorteilen, sowie in zeitlicher Hinsicht, als auch im Hinblick auf den erforderlichen Energieverbrauch.

Im Rahmen bevorzugter Ausgestaltungen der Erfindung ist einerseits eine Anwendung zum Zweck des Mähens, insbesondere in einem privaten Umfeld, günstig und bevorzugt, die Einsatzbreite der Erfindung darauf jedoch nicht beschränkt. Vielmehr eignet sich diese für jegliche Anwendungen einer selbststeuernden mobilen Plattform, mit denkbaren exemplarischen weiteren Anwendungsfeldern im Bereich des Kehrens oder Saugens, des Düngens, des Bewässerns usw., jeweils als mögliche Bearbeitungsvorgänge der Fläche bzw. entsprechend besonders bearbeitungsbedürftiger Teilflächen.

Im Rahmen bevorzugter Weiterbildungen der Erfindung ist die Bestimmungseinheit so ausgebildet, dass diese einen Lernmodus aufweist. In diesem Lernmodus ist es möglich, auf einfache und effiziente Art die (mindestens eine) Teilfläche zu bezeichnen oder zu erkennen; dies kann etwa durch manuelles Auswählen und Anzeigen durch eine Bedienperson erfolgen, genauso wie automatisiert / sensorgesteuert, etwa durch Verfahren der (ansonsten bekannten) elektronischen Bilderfassung und -verarbeitung, andere Techniken der Navigation (etwa durch GPS- und/oder Kartendaten) oder dergleichen.

Auch ist gemäß einer bevorzugten Ausführungsform die Bestimmungseinheit so eingerichtet, dass diese im Zusammenwirken mit der Arbeits- bzw. Funktionseinheit (also z.B. dem Mähwerk) in einem regulären Betrieb (ersten Betriebsmodus) besonders schwierige Betriebsumstände erkennt, welche eine Klassifikation des zugehörigen Bereichs als behandlungsbedürftige Teilfläche erforderlich machen. Dies kann etwa der Fall bei besonders dichtem Gras sein, welches mit entsprechend höherem Energie- bzw. Kraftaufwand zu bearbeiten ist und sich z.B. durch einen erhöhten Ankerstrom eines Elektromotors des Schneidwerks problemlos detektieren lässt.

In besonders bevorzugter Weise ist der zweite Bearbeitungsmodus für den Teilflächenbetrieb so eingerichtet, dass die Teilfläche direkt, insbesondere ohne Bearbeitung der Fläche außerhalb der Teilfläche, angefahren wird. Auf diese Weise lässt sich, wie oben beschrieben, die Effizienz der Vorrichtung optimieren.

Neben einer autonomen mobilen Plattform als Vorrichtung ist mit der vorliegenden Erfindung ein Verfahren zur Flächenbearbeitung durch ein selbststeuerndes Fahrzeug als autonome mobile Plattform beansprucht. Vorteilhaft wird auch hier die Effizienz der Behandlung eines heterogenen Flächenstücks, insbesondere Rasens, dadurch erhöht, dass nach dem Festlegen eines (besonders behandlungsbedürftigen) Teilbereichs in der Fläche die Arbeits- bzw. Funktionseinheit und/oder das Fahrzeug in dem zweiten Betriebsmodus betrieben wird/werden, etwa mit der Möglichkeit, in der vorbeschriebenen Weise selektiv die Teilfläche (Teilbereiche) anzufahren.

Entsprechend gelten die bevorzugten Weiterbildungen des erfindungsgemäß beanspruchten Erzeugnisses (Plattform) analog für das erfindungsgemäß beanspruchte Verfahren.

Im Ergebnis ermöglicht es die vorliegende Erfindung, in überraschend einfacher und eleganter Weise die praktische Funktionalität einer autonomen mobilen Plattform, insbesondere realisiert als ARM, so zu erhöhen, dass einer realistischen Anwendungssituation mit heterogen zu bearbeitenden Flächen, eingeschlossen besonders bearbeitungsbedürftigen Teilflächen, effizient Rechnung getragen wird und so die Möglichkeit besteht, dass die Technologie autonomer Plattformen sich weiter im Markt durchsetzen wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein schematisches Blockschaltbild zum Verdeutlichen wesentlicher Funktionskomponenten der autonomen mobilen Plattform, realisiert als autonomer Rasenmäher gemäß einer ersten bevorzugten Ausführungs- form der Erfindung;
- Fig. 2: eine schematische Darstellung eines Grundstücks als zu bearbeitender Fläche mit mäanderförmig beschriebener Fahrt zur Bearbeitung der Ge- samtfläche und angedeuteten Teilbereichen (Teilflächen), welche be- sonders bearbeitet werden müssen, und
- Fig. 3: eine Darstellung der Gesamtfläche analog der Fig. 2, jedoch lediglich mit isoliert dargestellten Teilbereichen und darauf dargestelltem Mähpfad.

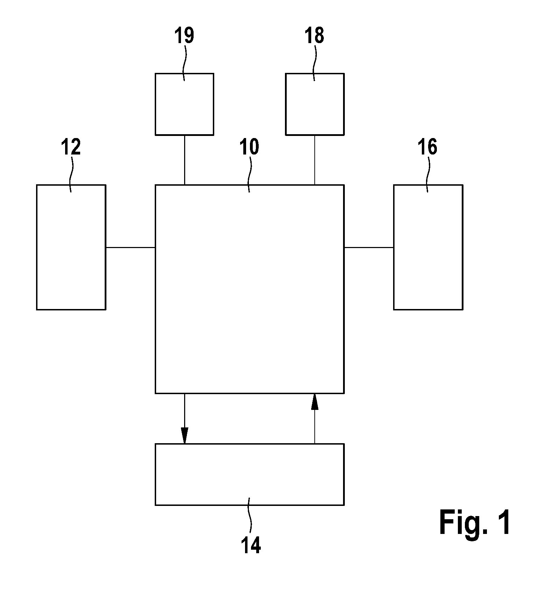

Die Fig. 1 verdeutlicht mit den Elementen des Blockschaltbildes, wie verschiedene Funktionseinheiten des ARM miteinander zusammenwirken. Alle in Fig. 1 gezeigten Einheiten sind Teil eines die mobile Plattform realisierenden Fahrzeugs.

So ist auf einem (nicht gezeigten) Fahrgestell eine Antriebseinheit 12 vorgesehen, welche von einer zentralen Steuereinheit 10 (etwa realisiert mittels einer Mikroprozessor- oder Mikrocontrollereinheit samt zugehöriger Speicherinfrastruktur) angesteuert wird. Die zentrale Steuereinheit ist durch eine Bedieneinheit 16, z.B. ein Bedienpanel, Tasten oder dergleichen, durch eine Bedienperson bedienbar.

Die Anordnung als selbststeuernde Vorrichtung trägt eine Arbeits- und Funktionseinheit 14, im dargestellten Ausführungsbeispiel realisiert als Mähwerk, zum Bewirken eines Mähvorgangs unterhalb des Fahrzeugs entlang des vom Fahrzeug abgefahrenen Pfades. Dabei ist einerseits die zentrale Steuereinheit 10 so vorgesehen, dass diese durch Steuersignale die Mäheinheit aktiviert bzw. deaktiviert (ergänzend und weiterbildungsgemäß auch die Mähleistung, etwa im Fall eines Teilbereichs, welcher besondere Mähleistung benötigt, erhöhen kann). Ergänzend empfängt die zentrale Steuereinheit 10, symbolisiert durch den zweiten Pfeil, ein Signal der Arbeits- bzw. Funktionseinheit 14, welches (etwa in Form eines Ankerstroms) überhaupt eine Detektion zulässt, dass besondere Bearbeitungsbedingungen (z.B. zähes Gras) vorliegen. Die zentrale Steuereinheit 10 kann dann aus diesen Informationen, in Verbindung mit Navigationsinformationen aus einer GPS-Sensoreinheit 19 (welche in ansonsten bekannter Weise Positionsdaten bereitstellt), den jeweiligen ermittelten Betriebszustand einer besonders zu behandelnden Teilfläche zuordnen.

Zusätzlich oder alternativ weist die Vorrichtung eine Sensorikeinheit 18 in Form einer Kamera als Bilderfassungseinheit auf, welche ergänzend oder alternativ die Detektion einer besonders bearbeitungsbedürftigen Teilfläche ermöglicht. Dies geschieht beispielsweise durch das optische Erfassen einer Kontur der Teilfläche, welche durch ansonsten bekannte Verfahren der elektronischen Bildauswertung dann bestimmt und (wiederum mit Positionsdaten versehen) als Flächeninformation zugeordnet, ggf. kartographiert werden kann.

Eine derartige Vorrichtung ist dann in der Lage, etwa entlang des in Fig. 2 beschriebenen, mäanderförmigen Pfades die Grundstücksfläche 20 (Rasenfläche) abzufahren, wobei die gepunktete Linie einen Mähbetrieb, d.h. einen Aktivierungszustand der Arbeitseinheit 14, verdeutlicht. Während dieses Pfades stellt die Vorrichtung, durch Rückmeldung von der Mäheinheit und/oder durch entsprechende Erfassungssignale der Sensoreinheit 18, das Vorhandensein und die Position der jeweiligen Teilflächen 22 fest.

Gemäß der bevorzugten Realisierungsform der Erfindung und verdeutlicht in Fig. 3, wird dann erneut ein Mähbetrieb der Fläche durchgeführt, jedoch konzentriert lediglich auf die Teilbereiche 22. Dies geschieht dadurch, dass die Vorrichtung die jeweiligen Flächen (identifiziert anhand ihrer Navigationsdaten) gezielt anfährt, bevorzugt während der Anfahrt keinen Mähbetrieb durchführt und dann lediglich bei einer Position an oder in einer jeweiligen Teilfläche durch Aktivierung des Mähwerks dort gezielt ein Mähen (entweder im Normalmähbetrieb, oder mit erhöhter Mähleistung) durchführt.

Auf diese Weise ist sehr effizient, energiesparend und wirksam eine Vorrichtung behandelbar, wie sie gemäß Fig. 2, Fig. 3 durch Inhomogenität gekennzeichnet ist.

Die vorliegende Erfindung ist nicht auf das beschriebene Beispiel des Mähens beschränkt. Vielmehr ist von der Erfindung umfasst, das beschriebene erfindungsgemäße Vorgehen auch auf zahlreiche weitere (wiederum bevorzugt private, jedoch nicht auf diese beschränkte) Anwendungsfelder auszudehnen, wie etwa Düngen, Bewässern, Kehren, Staubsaugen oder dergleichen.

## Patentansprüche

1. Autonome mobile Plattform zur Flächenbearbeitung mit einem selbststeuernden Fahrzeug, das zum autonomen Fortbewegen auf einer Fläche (20) und als Träger für eine Arbeits- und/oder Funktionseinheit (14) zur Bearbeitung der Fläche in einem ersten Bearbeitungsmodus ausgebildet ist, wobei das Fahrzeug Navigationsmittel (18, 19) zur Bestimmung einer Position des Fahrzeugs in der Fläche aufweist,
**dadurch gekennzeichnet,**
**dass**, die Navigationsmittel eine Bestimmungseinheit (10) für eine ausgewählte oder auswählbare Teilfläche (22) in der Fläche (20) aufweisen und
das Fahrzeug so eingerichtet ist, dass es die Bearbeitung der Teilfläche in einem zweiten, vom ersten Bearbeitungsmodus verschiedenen Bearbeitungsmodus durchführt.

2. Plattform nach Anspruch 1,
**dadurch gekennzeichnet,**
**dass** die Arbeits- und/oder Funktionseinheit (14) eine Mähvorrichtung, insbesondere Rasenmäher, eine Saugvorrichtung, eine Kehrvorrichtung, eine Düngevorrichtung und/oder eine Bewässerungsvorrichtung ist.

3. Plattform nach Anspruch 1 oder 2,
**dadurch gekennzeichnet,**
**dass** der zweite Bearbeitungsmodus eine intensive Bearbeitung der Fläche (20), insbesondere ein Rasenmähen mit erhöhter Mähkraft im Falle der Ausgestaltung der Arbeits- und/oder Funktionseinheit (14) als Rasenmäher, ermöglicht.

4. Plattform nach einem der Ansprüche 1 bis 3,
**dadurch gekennzeichnet,**
**dass** die Bestimmungseinheit (10) einen Lernmodus zum manuellen und/oder sensorgesteuerten Bestimmen und/oder Auswählen der Teilfläche (22) anbietet.

5. Plattform nach einem der Ansprüche 1 bis 4,
**dadurch gekennzeichnet,**
**dass** die Bestimmungseinheit (10) eine elektrische Bilderfassungs- und Bildverarbeitungseinheit zum Erfassen der Teilfläche (22) aufweist.

6. Plattform nach einem der Ansprüche 1 bis 5,
**dadurch gekennzeichnet,**
**dass** die Bestimmungseinheit (10) so mit der Arbeits- bzw. Funktionseinheit (14) zusammenwirkt, dass als Reaktion auf von der Arbeits- bzw. Funktionseinheit (14) im ersten Bearbeitungsmodus erfasste abweichende Betriebsbedingungen, insbesondere ein erhöhter elektrischer Energieverbrauch, eine Position an oder in der Teilfläche (22) festgestellt wird.

7. Plattform nach einem der Ansprüche 1 bis 6,
**dadurch gekennzeichnet,**
**dass** das Fahrzeug für einen Teilflächenbetrieb so ausgebildet ist, dass es im zweiten Bearbeitungsmodus die Teilfläche (22) direkt, insbesondere ohne Bearbeitung der Fläche (20) außerhalb der Teilfläche (22), anfährt.

8. Verfahren zur Flächenbearbeitung durch ein selbststeuerndes Fahrzeug als autonome mobile Plattform, die eine Arbeits- und/oder Funktionseinheit (14) zur Bearbeitung der Fläche (20) in einem ersten Bearbeitungsmodus trägt, **gekennzeichnet durch** die Schritte:
- Festlegung eines Teilbereichs (22) in der Fläche (20) und
- Betreiben des Fahrzeugs und/oder der Arbeits- und/oder Funktionseinheit (14) in einem zweiten, vom ersten Bearbeitungsmodus verschiedenen und für den Teilbereich (22) vorgesehenen Bearbeitungsmodus.

9. Verfahren nach Anspruch 8,
**dadurch gekennzeichnet,**
**dass** der Schritt der Festlegung des Teilbereichs (22)
- das manuelle Eingeben von Positionsinformationen des Teilbereichs (22), insbesondere in einem Lernmodus, und/oder
- das sensorbasierte Erfassen des Teilbereichs (22), insbesondere durch Bildverarbeitung eines Bildsensorausgangssignals des Teilbereichs (22) und/oder durch Auswertung von Betriebsparameteränderungen der Arbeits- und/oder Funktionseinheit (14) aufweist.

10. Verfahren nach Anspruch 8 oder 9,
**dadurch gekennzeichnet**
**dass** der zweite Bearbeitungsmodus das direkte Anfahren des Teilbereichs (22), insbesondere ohne eine Bearbeitung der Fläche (20) außerhalb des Teilbereichs (22) aufweist.

11. Verfahren nach einem der Ansprüche 8 bis 10,
**dadurch gekennzeichnet,**
**dass** die Bearbeitung der Fläche (20) das Mähen einer Rasenfläche ist, wobei der Teilbereich (22) einen Teilbereich des Rasens mit gegenüber der Fläche (20) außerhalb des Teilbereichs erhöhten Anforderungen an das Mähen darstellt.
